# EUROPEAN PATENT SPECIFICATION

(11) **EP 1 112 479 B1**
(45) Date of publication and mention of the grant of the patent: **15.08.2018**
(21) Application number: 99945510.8
(22) Date of filing: 03.09.1999
(51) Int. Cl.: G01N 1/30, G01N 1/31, G01N 1/36, G01N 35/10

(54) **AUTOMATED REMOVAL OF EMBEDDING MEDIA FROM BIOLOGICAL SAMPLES**
AUTOMATISCHE ENTFERNUNG VON EINBETTUNGSMEDIEN VON BIOLOGISCHEN PROBEN
EXTRACTION AUTOMATIQUE DES MILIEUX D'INCORPORATION D'ECHANTILLONS BIOLOGIQUES

(30) Priority: 03.09.1998 US 99018 P; 26.02.1999 US 259240; 26.02.1999 WO PCT/US99/04181
(43) Date of publication of application: 04.07.2001
(73) Proprietor: Ventana Medical Systems, Inc., Tucson, Arizona 85755 (US)
(72) Inventor: CHRISTENSEN, Kimberly, Tucson, AZ 85712 (US); MACREA, Ethel, Tucson, AZ 85705 (US); SEBASTIAO, Noemi, Oro Valley, AZ 85737 (US)
(74) Representative: Müller-Boré & Partner Patentanwälte PartG mbB
(86) International application number: PCT/US1999/020353
(87) International publication number: WO 2000/014507

(56) References cited:
- EP-A- 0 508 568
- WO-A-94/04906
- WO-A-95/24498
- US-A- 4 043 292
- US-A- 5 023 187
- US-A- 5 187 099
- US-A- 5 244 787
- US-A- 5 273 905
- US-A- 5 318 795
- US-A- 5 344 637
- US-A- 5 439 649
- US-A- 5 614 376
- US-A- 5 695 942

## Description

### BACKGROUND OF THE INVENTION

### Field of the Invention

The present invention relates to a method for removing embedding media from biological samples on automated instruments prior to immunohistochemical (IHC), *in situ* hybridization (ISH) or other histochemical or cytochemical manipulations. The present invention also relates to a method for conditioning cells or tissues so as to increase the accessibility of various molecules to their respective targets and generally to improve tissue and cell readability.

### Summary of the Related Art

Diagnosis of disease based on interpretation of tissue or cell samples taken from a diseased organism has expanded dramatically over the past few years. In addition to traditional histological staining techniques and immunohistochemical assays, *in situ* techniques such as *in situ* hybridization and *in situ* polymerase chain reaction are now used to help diagnose disease states in humans. Thus, there are a variety of techniques that can assess not only cell morphology, but also the presence of specific macromolecules within cells and tissues. Each of these techniques requires the preparation of sample cells or tissues which may include fixing the sample with chemicals such as an aldehyde (such as formaldehyde, glutaraldehyde), formalin substitutes, alcohol (such as ethanol, methanol, isopropanol) or embedding the sample in inert materials such as paraffin, celloidin, agars, polymers, resins, cryogenic media or a variety of plastic embedding media (such as epoxy resins and acrylics). Other sample tissue or cell preparations require physical manipulation such as freezing (frozen tissue section) or aspiration through a fine needle (fine needle aspiration (FNA)). Regardless of the tissue or cell sample or its method of preparation or preservation, the goal of the technologist is to obtain accurate, readable and reproducible results that permit the accurate interpretation of the data. One way to provide accurate, readable and reproducible data is to prepare the tissue or cells in a fashion that optimizes the results of the test regardless of the technique employed. In the case of immunohistochemistry and *in situ* techniques this means increasing the amount of signal obtained from the specific probe (antibody, DNA, RNA). In the case of histochemical staining it may mean increasing the intensity of the stain or increasing staining contrast.

Without preservation, tissue samples rapidly deteriorate such that their use in diagnostics is compromised shortly after removal from their host. In 1893, Ferdinand Blum discovered that formaldehyde could be used to preserve or fix tissue so that this tissue could be used in histochemical procedures. The exact mechanisms by which formaldehyde acts in fixing tissues are not fully established, but they involve cross-linking of reactive sites within the same protein and between different proteins via methylene bridges (Fox et al., J. Histochem. Cytochem. 33: 845-853 (1985)). Recent evidence suggests that calcium ions also play a role (Morgan et al., J. Path. 174: 301-307 (1994)). These links cause changes in the quaternary and tertiary structures of proteins, but the primary and secondary structures appear to be preserved (Mason et al., J. Histochem. Cytochem. 39: 225-229 (1991)). The extent to which the cross-linking reaction occurs depends on conditions such as the concentration of formalin, pH, temperature and length of fixation (Fox et al., J. Histochem. Cytochem. 33: 845-853 (1985)). Some antigens, such as gastrin, somatostatin and α-1-antitrypsin, may be detected after formalin fixation, but for many antigens, such as intermediate filaments and leukocyte markers, immunodetection after formalin treatment is lost or markedly reduced (McNicol & Richmond, Histopathology 32: 97-103 (1998)). Loss of antigen immunoreactivity is most noticeable at antigen epitopes that are discontinuous, *i.e.* amino acid sequences where the formation of the epitope depends on the confluence of portions of the protein sequence that are not contiguous.

Antigen Retrieval™ is a term that describes the attempt to "undo" the structural changes that treatment of tissue with a cross-linking agent induces in the antigens resident within that tissue. Although there are several theories that attempt to describe the mechanism of Antigen Retrieval™ such as loosening or breaking of crosslinkages formed by formalin fixation, it is clear that modification of protein structure by formalin is reversible under conditions such as high-temperature heating. It is clear that several factors affect Antigen Retrieval™: heating, pH, molarity and metal ions in solution (Shi et al., J. Histochem. Cytochem. 45: 327-343 (1997)).

Microwave heating appears to be the most important factor for retrieval of antigens masked by formalin fixation. Microwave heating (100°±5°C) generally yields better results in Antigen Retrieval™ immunohistochemistry (AR-IHC).

Different heating methods have been described for *antigen retrieval* in IHC such as autoclaving (Pons et al, Appl. Immunohistochem. 3: 265-267 (1995); Bankfalvi et al., J. Path. 174: 223-228 (1994)), pressure cooking (Miller & Estran, Appl. Immunohistochem. 3: 190-193 (1995); Norton et al., J. Path. 173: 371-379 (1994)); water bath (Kawai et al., Path. Int. 44: 759-764 (1994)), microwaving plus plastic pressure cooking (U.S. Patent No.; Taylor et al. (1995); Pertschuk et al., J. Cell Biochem. 19(suppl.): 134-137 (1994)), and steam heating (Pasha et al., Lab. Invest. 72: 167A (1995); Taylor et al., CAP Today 9: 16-22 (1995)).

Although some antigens yield satisfactory results when microwaving is performed in distilled water, many antigens require the use of buffers during the heating process. Some antigens have particular pH requirements such that adequate results will only be achieved in a narrow pH range. Presently, most Antigen Retrieval™ solutions are used at a pH of approximately 6-8, but there is some indication that slightly more basic solutions may provide marginally superior results (Shi, et al., J. Histochem. Cytochem. 45: 327-343 (1997)).

Although the chemical components of the Antigen Retrieval™ solution, including metal ions, may play a role as a possible co-factor in the microwaving procedure, thus far, no single chemical has been identified that is both essential and best for Antigen Retrieval™.

Many solutions and methods are used routinely for staining enhancements. These may include but are not limited to distilled water, EDTA, urea, Tris, glycine, saline and citrate buffer. Solutions containing a variety of detergents (ionic or non-ionic surfactants) may also facilitate staining enhancement under a wide range of temperatures (from ambient to in excess of 100°C).

In addition to cell surface molecules that may be present on the exterior portion of the cell, other molecules of interest in IHC, ISH and other histochemical and cytochemical manipulations are located within the cell, often on the nuclear envelope. Some of these molecules undergo molecular transformation when exposed to a fixative (coagulative or precipitive) such as formalin. Thus with respect to these molecules it is desirable to not only overcome the effects of fixation but also to increase the permeability of the cell in order to facilitate the interaction of organic and inorganic compounds with the cell.

Other tissue samples may not have been subjected to cross-linking agents prior to testing, but improved results with respect to these tissues is also important. There are a variety of non-formalin methods for preserving and preparing cytological and histological samples. Examples of these methods include but are not limited to a) hematology smears, cytospins™, ThinPreps™, touch preps, cell lines, Ficoll separations for lymphocytes and buffy coats etc. are routinely preserved in a many ways which include but are not limited to air-drying, alcoholic fixation, spray fixatives and storage mediums such as sucrose/glycerin storage medium. b) tissues and cells (either fixed or unfixed) may be frozen and subsequently subjected to various stabilizing techniques such preservation, fixation and desiccation. c) tissues and cells may be stabilized in a number of non-cross-linking aldehyde fixatives, non- aldehyde containing fixatives, alcoholic fixatives, oxidizing agents, heavy metal fixatives, organic acids and transport media.

One way to improve testing results is to increase the signal obtained from a given sample. In a general sense, increased signal can be obtained by increasing the accessibility of a given molecule for its target. As in the case for antigens found within the cell, targets within the cell can be made more accessible by increasing the permeability of the cell thereby permitting a greater number of molecules entry into the cell, thereby increasing the probability that the molecule will "find" its target. Such increased permeability is especially important for techniques such as ISH, *in situ* PCR, IHC, histochemistry and cytochemistry.

Tissues and cells are also embedded in a variety of inert media (paraffin, celloidin, OCT™, agar, plastics or acrylics etc.) to help preserve them for future analysis. Many of these inert materials are hydrophobic and the reagents used for histological and cytological applications are predominantly hydrophilic, therefor the inert medium may need to be removed from the biological sample prior to testing. For example, paraffin embedded tissues sections are prepared for subsequent testing by removal of the paraffin from the tissue section by passing the slide through various organic solvents such as toluene, xylene, limonene or other suitable solvents. Traditional deparaffinization uses organic solvents, which generally requires that the process be performed in ventilated hoods. Furthermore use and disposal of these solvents increases the cost of analysis and exposure risk associated with each tissue sample tested.

Presently, there is no available technique for removing inert media from sample tissue by directly heating the slide in an automated fashion. Neither is it currently possible to remove inert media from sample tissue while conditioning the sample tissue or cell in a one-step automated staining process.

The methods of the present invention permit a) automated removal of embedding media without the use of organic solvents, thus ***exposing*** the cells for staining and thereby reducing time, cost and safety hazards b) automated ***cell conditioning*** without automated removal of embedding media from the sample cell or tissue. c) a multi-step automated process that ***exposes*** the cells, performs ***cell conditioning*** and increases permeability of the cytological or histological specimens, thereby increasing sample readability and improving interpretation of test data. The methods of the present invention can be used for improving the stainability and readability of most histological and cytological samples used in conjunction with cytological and histological staining techniques.

### SUMMARY OF THE INVENTION

The present invention relates to an automated method for ***exposing*** biological samples for use in histological or cytological testing procedures by removing the embedding media without the use of organic solvents. The method of the present invention is defined in claim 1.

### DETAILED DESCRIPTION OF THE PREFERRED EMBODIMENTS

The present invention relates to the ***exposing*** of biological samples by removal of the inert materials in which biological samples have been embedded for preservation and support. In a preferred embodiment of the present invention, paraffin or other inert materials are removed from biological samples by heating one side of the biological sample. This may be accomplished by contact heating of the microscope slide on which the embedded biological samples have been placed. Other inert materials that can be removed from embedded biological samples include but are not limited to agars and cryogenic media. This process of removal of inert embedding media or etching of embedding media is referred to herein as ***exposing.***

In the method of the present invention, the paraffin-embedded biological sample laying on the glass slide is first heated by a heating element. The heating element exposes heat on one side of the biological sample such that the sample slide is dried and the paraffin is melted. Typically, the biological sample is placed on a top surface of a slide (such as a glass slide). The slide is then placed on top of the thermal platform, so that the bottom surface of the slide is in contact with the thermal platform. The thermal platform, via conduction, heats the bottom portion of the slide. After the heating of the biological sample, the inert material is rinsed with DI water and a surfactant.

In a preferred embodiment of the present invention, reagents are used in conjunction with heating the embedded biological samples. Suitable reagents may include, but are not limited to, de-ionized water, citrate buffer (pH 6.0-8.0), Tris-HCl buffer (pH 6-10), phosphate buffer (pH 6.0-8.0), SSC buffer, APK Wash™, acidic buffers or solutions (pH 1-6.9), basic buffers or solutions (pH 7.1-14), mineral oil, Norpar, canola oil, and PAG oil. Each of these reagents may also contain ionic or non-ionic surfactants such as Triton X-100, Tween, Brij, saponin and sodium dodecylsulfate.

In a method of the present invention, the temperature of the heating element is raised to a temperature in excess of the melting point of the inert material. For example, the melting point of *pure* paraffin is listed as 50-57° C in the Merck index. Thus, in the method of the present invention, the temperature is in excess of the melting point of the paraffin in which the biological sample is embedded. In a preferred method of the present invention, the temperature is raised in excess of 50° C to about 130° C.

In a method of the present invention, the duration of time required to melt the inert material will vary according to the temperature used and the embedding material. Typically, in an automated system, a processor, such as a microprocessor, is used in conjunction with a memory. The amount of time and the temperature required to melt the paraffin is contained within a table contained in the memory.

The paraffin embedded biological sample is subjected to elevated temperatures ranging from 5 minutes to 60 minutes. The heating element used in the method of the present invention requires that sufficient contact be maintained between the surface on which the biological sample is placed and the heating element.

In another method of the present invention, an embedded biological sample is placed on a glass microscope slide and the microscope slide is heated on one side (*e.g.,* by placing the slide on a thermal platform). A reagent is then placed on the biological sample slide and the biological sample slide, with the reagent, is then heated to a specified temperature (ranging from ambient to greater than 100°C) and for a specified amount of time (ranging from 2 minutes to 12 hours). This will cause etching of the surface of the inert embedding material, and after which the etching reagent may be removed from the slide by a fluid (as a gas or liquid). As discussed previously, the amount of time and the specified temperature may be stored in memory. Further reagents are used in conjunction with or without heating the embedded biological samples. Suitable reagents may include, but are not limited to, de-ionized water, citrate buffer (pH 6.0-8.0), Tris-HC1 buffer (pH 6-10), phosphate buffer (pH 6.0-8.0), SSC buffer, APK Wash™, acidic buffers or solutions (pH 1-6.9), basic buffers or solutions (pH7.1-14) mineral oil, Norpar, canola oil, and PAG oil. Each of these reagents may also contain ionic or non-ionic surfactants such as Triton X-100, Tween, Brij, saponin and sodium dodecylsulfate.

In the method of the present invention, the duration of time required to etch the inert material will vary according to the temperature used and the embedding material (plastic or celloidin embedding media and/or other polymers and resins etc.). In a preferred method of the present invention the embedded biological sample is subjected to appropriate temperatures ranging from 2 minutes to 12 hours. The heating element used in the method of the present invention requires that sufficient contact be maintained between the surface on which the biological sample is placed and the heating element.

The term "Biological sample" is meant any collection of cells (either loose or in tissue) that can be mounted on a standard glass microscope slide including, without limitation, sections of organs, tumors sections, bodily fluids, smears, frozen sections, blood, cytology preps, microorganisms and cell lines.

The term "Stain" is meant any biological or chemical entity which, when applied to targeted molecules in biological sample, renders the molecules detectable under microscopic examination. Stains include without limitation detectable nucleic acid probes, antibodies, and other reagents which in combination or by themselves result in a colored end product (by bright field or fluorescence).

### EXAMPLES

### Example 1

### Automated "Exposing" and "Cell Conditioning" with Biological Samples Stained with H&E

Biological samples, including breast CHTN33, stomach 149G, brain, tonsil and kidney, that had been embedded in paraffin were ***exposed*** according to the following procedure: slides containing the above referenced biological sample were placed on an automated instrument (Ventana Medical Systems, Inc., Tucson, AZ) and subjected to the ***exposing*** protocol described below. Generally, the slides containing paraffin embedded biological samples were dry heated to 65° C for six (6) minutes then rinsed with 1x citrate buffer, de-ionized water, 10mM phosphate buffer (pH = 6.3), or 10mM Tris-HCl buffer (pH = 7.4) each containing 0.1% Triton X-100.

### Exposing Protocol 1

1. Incubate for 2 minutes
2. Rinse slide
3. Adjust slide volume and apply liquid coverslip™
4. Incubate for 6 minutes
5. Rinse slide
6. Adjust slide volume and apply liquid coverslip™
7. Increase temperature to 65.0° C
8. Rinse slide
9. Adjust slide volume and apply liquid coverslip™
10. Incubate for 4 minutes
11. Adjust slide volume and apply liquid coverslip™
12. Incubate for 4 minutes
13. Adjust slide volume and apply liquid coverslip™
14. Incubate for 4 minutes
15. Rinse slide
16. Decrease temperature to 42.0° C
17. Adjust slide volume and apply liquid coverslip™
18. Incubate for 4 minutes
19. Rinse slide
20. Decrease temperature to 42.0° C
21. Adjust slide volume and apply liquid coverslip™
22. Incubate for 4 minutes
23. Rinse slide

After automated **exposing,** the biological sample was stained with hematoxylin and eosin by the following method. Slides were placed in hematoxylin 1 (Richard Allen Scientific, Kalamazoo, MI) for 1.5 minutes and then rinsed with running de-ionized water for one minute. Slides were then placed in acid alcohol clarifier (Richard Allen Scientific) for one minute and then rinsed with running de-ionized water for one minute. Slides were then placed in diluting ammonia-bluing reagent for one minute (Richard Allen Scientific, Kalamazoo, MI) and then rinsed in running de-ionized water for one minute. Slides were then rinsed in 95% ethanol, and then placed in 2.5% eosin Y (Richard Allen Scientific, Kalamazoo, MI) for 2.5 minutes. The biological samples on the slides were dehydrated by exposing the biological sample to a 100% ethanol bath for one minute. This process was repeated three times followed by exposure of the biological sample to a xylene bath for three minutes, twice. After the dehydration step the biological sample was covered with a coverslip.

Control biological samples were deparaffinized by a traditional solvent-based deparaffinization technique. Biological sample place on microscope slides and preserved in paraffin were completely submersed in a xylene bath for five minutes. Slides containing biological sample were placed in a second xylene bath for five minutes. After removal from the second xylene bath, the slides were placed in a 100% ethanol bath for three minutes. Slides were then placed in a second 100% ethanol bath for three minutes and then placed in a 90% ethanol solution for two minutes. The slides were then placed in 80% ethanol for one minute followed by complete immersion in distilled water for one to three minutes. After deparaffinization, the biological samples were stained with hematoxylin and eosin as described above.

The biological samples that were deparaffinized by the solvent technique and by the automated heating technique were compared after staining by hematoxylin and eosin. Morphology on all sets of slide was acceptable and essentially equivalent. The tonsil and brain biological samples that were ***exposed*** by the automated heating method showed more intensified hematoxylin staining than the biological samples deparaffinized by standard solvent techniques.

### Example 2

### Automated "Exposing" of Biological e Samples with Simultaneous "Cell Conditioning"

Biological samples of kidney Q-10 and tonsil T998D that had been formalin fixed and embedded in paraffin were ***exposed*** according to the protocol described in Example 1. After automated ***exposing,*** the biological sample was subjected to the DAB paraffin protocol used for immunohistochemical staining. The protocol for DAB staining is described below:
1. Incubate for 2 minutes
2. Rinse slide
3. Adjust slide volume and apply liquid coverslip™
4. Rinse slide
5. Adjust slide volume and apply liquid coverslip™
6. Rinse slide
7. Adjust slide volume and apply liquid coverslip™
8. Apply one drop of inhibitor
9. Incubate for 4 minutes
10. Adjust slide volume and apply liquid coverslip™
11. Apply one drop of primary antibody
12. Incubate for 32 minutes
13. Adjust slide volume and apply liquid coverslip™
14. Apply one drop of Biotinylated Ig
15. Incubate for 8 minutes
16. Rinse slide
17. Adjust slide volume and apply liquid coverslip™
18. Apply one drop of Avidin-HRPO
19. Incubate for 8 minutes
20. Rinse slide
21. Adjust slide volume and apply liquid coverslip™
22. Apply one drop of DAB and one drop DAB H₂O₂
23. Incubate for 8 minutes
24. Rinse slide
25. Adjust slide volume and apply liquid coverslip™
26. Apply one drop of Copper
27. Incubate for 4 minutes
28. Rinse slide

The primary antibody used for the kidney Q-10 biological sample was Anti-CD15 (Ventana Medical Systems, Inc. Tucson, AZ, Catalogue no. 250-2504). The primary antibody used for the tonsil T998D biological sample was Anti-CD45RO (Ventana Medical Systems, Inc. Tucson, AZ, Catalogue no. 250-2563). The DAB staining kit used was obtained from Ventana Medical Systems, Inc. Tucson, AZ, Catalogue no. 250-001.

Control biological samples were deparaffinized by a traditional solvent-based deparaffinization technique, as described in Example 1. After deparaffinization the biological samples were placed in a pressure cooker (Model #62104 Nordic Ware, Minneapolis, MN) containing 1.5 L 1x citrate buffer. The pressure cooker was then sealed and placed in a microwave oven (Model #MQSO836E, Matsushita, Franklin Park, IL). With the microwave oven set on "high," the samples were subjected to microwave heating for approximately 30 minutes. After microwaving the samples were then "cured" for 30 minutes in the pressure cooker with the lid securely fastened. After curing the biological samples were placed in 1x citrate buffer for two minutes. The biological samples were then removed from the citrate buffer and the end of the slides blotted to removed excess citrate buffer. After blotting, the slides were placed on the automated instrument and immunohistochemically stained as described above.

The biological samples deparaffinized by the solvent technique and by the automated ***exposing*** and simultaneous ***cell conditioning*** technique were compared after immunohistochemical staining. Morphology on all sets of slide was acceptable and essentially equivalent.

### Example 3

### Two Step Automated "Exposing" and "Cell Conditioning"

Biological sample samples of tonsil T998D, tonsil Ki67, E68, E7, E33, E8, E29, E15, and E68 that had been preserved in paraffin and treated with formaldehyde were treated by the following protocol:

### Exposing and Cell Conditioning

1. Incubate for 2 minutes
2. Increase thermofoil temperature to 65.0° C
3. Incubate for 6 minutes
4. Rinse slide and apply coverslip
5. Incubate for 6 minutes
6. Rinse slide and apply coverslip
7. Increase thermofoil temperature to 100.0° C
8. Adjust slide volume and apply liquid coverslip™
9. Rinse slide
10. Adjust slide volume and apply liquid coverslip™
11. Incubate for 4 minutes
12. Adjust slide volume and apply liquid coverslip™
13. Incubate for 4 minutes
14. Adjust slide volume and apply liquid coverslip™
15. Incubate for 4 minutes
16. Adjust slide volume and apply liquid coverslip™
17. Incubate for 4 minutes
18. Adjust slide volume and apply liquid coverslip™
19. Incubate for 4 minutes
20. Adjust slide volume and apply liquid coverslip™
21. Incubate for 4 minutes
22. Adjust slide volume and apply liquid coverslip™
23. Incubate for 4 minutes
24. Adjust slide volume and apply liquid coverslip™
25. Incubate for 4 minutes
26. Adjust slide volume and apply liquid coverslip™
27. Incubate for 4 minutes
28. Rinse slide
29. Decrease temperature to 42.0° C
30. Adjust slide volume and apply liquid coverslip™
31. Incubate for 4 minutes
32. Rinse slide
33. Decrease temperature to 20.0° C
34. Adjust slide volume and apply liquid coverslip™
35. Incubate for 4 minutes
36. Rinse slide

The buffer used in the protocol was SSC buffer with either 20% formamide or 0.1% Triton. After the biological sample was subjected to the above protocol, the DAB paraffin protocol used for immunohistochemical staining of Example 2 was applied. Tonsil biological sample was treated with anti-Ki67 as a primary antibody. Samples E68, E7, E33, and E8 biological sample was treated with anti-estrogen receptor (6F11) as a primary antibody. E29, E15, and E68 biological sample was treated with anti-progesterone receptor (1A6) as a primary antibody.

Control biological samples were deparaffinized by a traditional solvent-based de-paraffinization technique, as described in Example 1. After deparaffinization the biological samples were placed in a pressure cooker (Model #62104 Nordic Ware, Minneapolis, MN) containing 1.5 L 1x citrate buffer. The pressure cooker was then sealed and placed in a microwave oven (Model #MQSO836E, Matsushita, Franklin Park, IL). With the microwave oven set on "high", the samples were subjected to microwave heating for approximately 30 minutes. After microwaving the samples were then "cured" for 30 minutes in the pressure cooker with the lid securely fastened. After curing the biological samples were placed in 1x citrate buffer for two minutes. The biological samples were then removed from the citrate buffer and the end of the slides were blotted to removed excess citrate buffer. After blotting the slide were placed on the automated instrument and immunohistochemically stained as described above.

The biological samples deparaffinized by solvent technique and by the automated heating technique were compared after immunohistochemical staining. Morphology on all sets of slide was acceptable and essentially equivalent.

### Example 4

### Automated Cell Conditioning of Non Paraffin Embedded Cell Lines for in situ (Thin Preps™)

Hela (lot # 980427H), Caski (lot # 980416C) and Siha (lot # 980416S) cell lines stored in Cytyk preparation solution (lot # 01139Q) were deposited on microscope slides using the Cytyk 2000 instrument. After deposition the slides were placed in alcohol to keep moist until use on the Discovery® In-Situ staining module (Ventana Medical Systems Inc., Tucson, AZ). Slides were loaded into the instrument and wetted with 2 X SSC made from 20 X SSC (Ventana P/N 650-012). Slides were run through a ***cell conditioning*** protocol currently referred to as Depar 30 where the slides are rinsed with 2 X SSC and the temperature of the slides is increased to 95° C for a period of approximately 30 minutes. The slides are then cooled to 37° C and rinsed with APK Wash® prior to the in-situ staining run.

Using the protocol Blue Swap ISH the cell lines were stained for HPV 16/18 (Enzo HPV 16/18 Bio Probe cat # 32874). Prior to probe application the cell lines are enzymatically digested with Protease 2 (Ventana P/N 250-2019). After the probe application the probe and biological sample are denatured simultaneously at 95° C for 8 minutes. The non-specifically bound probe is washed off with stringency washes of 2 X SSC at 55° C. The probe is then detected with Streptavidin Alk Phos and NBT/BCIP.

The cell lines were dehydrated after staining with a one-minute exposure to 95 % ethanol and a one-minute exposure to 100% ethanol repeated 2 times. Following the ethanol the slides were exposed to xylene for 3 minutes twice. After dehydration the slides were coverslipped.

The stained cell lines after conditioning showed acceptable morphology, there was high background on these slides indicating a need for the process to be developed more.

### Wet Load Slides

1. Skip Application & Incubate for 2 minutes
2. Rinse Slides (2X SSC Buffer) (Warm Slides to 65° C)
3. Adjust Slide Volume, then Apply Coverslip
4. Skip Application & Incubate 6 minutes
5. Rinse Slides (2X SSC Buffer) (Warm Slides to 95° C)
6. Adjust Slide Volume, then Apply Coverslip
7. Rinse Slides
8. Adjust Slide Volume, then Apply Coverslip
9. Skip Application & Incubate for 4 minutes
10. Adjust Slide Volume, then Apply Coverslip
11. Skip Application & Incubate for 4 minutes
12. Adjust Slide Volume, then Apply Coverslip
13. Skip Application & Incubate for 4 minutes
14. Adjust Slide Volume, then Apply Coverslip
15. Skip Application & Incubate for 4 minutes
16. Adjust Slide Volume, then Apply Coverslip
17. Skip Application & Incubate for 4 minutes
18. Adjust Slide Volume, then Apply Coverslip
19. Skip Application & Incubate for 4 minutes
20. Adjust Slide Volume, then Apply Coverslip
21. Skip Application & Incubate for 4 minutes
22. Rinse Slides (2X SSC Buffer) (Warm Slides to 37° C)
23. Adjust Slide Volume, then Apply Coverslip
24. Skip Application & Incubate for 4 minutes
25. Rinse Slides (APK Wash)
26. Adjust Slide Volume, then Apply Coverslip

### Example 5

### Automated "Exposing" and "Cell Conditioning" for single copy DNA detection

Slides containing formalin fixed, paraffin embedded cell lines Caski (R96-1050A) and Siha (R96-96-C2) were stained on Ventana target slides. Slides were dry loaded onto the instrument and the slide temperature was increased to 65° C. Depar 30 protocol was run where the slides are rinsed with 2x SSC Buffer while at 65° C then the heat is increased to 95° C for about 40 minutes. The slides were then cooled to 37° C and rinsed with APK wash. At this time the following In Situ protocol was run:

### In-Situ Protocol: Tubbs 1

### (Dako TBST # 3306 is substituted for Ventana APK Wash during non-probe steps)

Protease Digestion: Protease 2, 4 minutes, 37 °C
Inhibitor Step: Ventana Inhibitor from DAB kit 32 minutes 37° C
Probe: Enzo HPV Bio Probe 16/18
Control Probe: Enzo HPV Bio Probe 6/11
Denaturation: 95°C, 8 minutes
Hybridization: 37°C, 64 minutes
2 Stringency Washes 2XSSC, 60°C, 8 minutes each
3^{rd} Stringency Wash 2XSSC, 37°C, 4 minutes
Probe Detection: Streptavidin HRPO (Dako GenPoint #K0620) Amplification: Biotinyl Tyramide (Dako GenPoint # K0620)
Detection: Streptavidin HRPO (Dako GenPoint #K0620) or
   Streptavidin Alk Phos (Vector # SA5100)
Chromogen DAB (Dako Gen Point # K0620) or
Ventana NBT/BCIP (Kit P/N) or
   Ventana Naphthol / Fast Red (Kit P/N)

### Example 6

### Automated "Cell Conditioning" for Non-paraffin Embedded Samples

The protocol for DAB staining as described in Example 2 was used in this Example.

The ***cell conditioning*** steps for these antibodies was done after using a Cytyk 2000® instrument to make ThinPreps® of cell lines. The ThinPreps® were stained using antibodies to ER, PgR, Ki67, P53 on Ventana ES instruments, NexES instruments and a manual procedure (Cytyk, Inc.). A duplicate group of slides have been stained on the NesES Insitu module, allowing the ***cell conditioning*** steps to be performed by automation.

Although the example stated above is specific to the Cytyk® instrument and staining of the ThinPreps®, the experience is not limited to that mode of making cytological preps.

### Example 7

### "Cell conditioning" of frozen biological sample

Frozen tonsil blocks 297C and 297D were prepared by cutting six sections from each block and placing the sample on microscope slides. Four slides from each block were placed on the Discovery™ Insitu module and put through protocol Depar 10.

Slides are dry heated to 65° for 6 minutes then rinsed with 0.1M EDTA buffer pH 8. After rinsing, the slide is incubated at 65° for 20 minutes. Slides were then cooled to 37° C and rinsed with APK Wash. Two slides from each block were left untreated as controls. Following the Depar 10 treatment two treated slides from each block and one untreated slide were stained for H & E as described in Example 1. Two treated slides from each block and one untreated from each block are stained for LCA. Run outcomes: for both the H & E and antibody staining there was no staining difference between the treated and untreated slides.

## Claims

1. An automated method of removing embedding media from a biological sample, the method comprising the steps of:
heating the biological sample containing embedding media to a temperature in excess of the melting point of the embedding media to form a liquefied embedding media; and
applying a liquid including DI water and a surfactant to the biological sample to separate the liquefied embedding media from the biological sample,
wherein the embedding medium is paraffin.

2. The method of claim 1, wherein the step of applying includes rinsing the melted embedding media from the biological sample.

3. The method of claim 1, wherein the step of melting is performed after the step of applying a liquid.

4. The method of claim 1 being an automated method of simultaneously removing embedding media from a biological sample while providing cell conditioning within a biological staining procedure, further comprising the steps of:
applying a second liquid comprising exposing and cell conditioning reagents;
applying heat to the biological sample;
applying fluid to remove the exposing and cell conditioning reagents; and
staining the biological sample.

5. The method of claim 1 further comprising the steps of :
applying a second liquid comprising cell conditioning reagents to the biological sample;
applying a fluid to remove the cell conditioning reagents; and
staining the biological sample.

6. The method of anyone of claims 1 to 5, wherein the liquid containing DI water is selected from the group consisting of de-ionized water, citrate buffer (pH 6.0-8.0), Tris-HCI buffer (pH 6-10), phosphate buffer (pH 6.0-8.0), SSC buffer, APK Wash™, acidic buffers or solutions (pH 1-6.9), and basic buffer or solutions (pH 7.1-14).

7. The method of claim 4 or 5, wherein the second liquid is selected from the group consisting of de-ionized water, citrate buffer (pH 6.0-8.0), Tris-HCI buffer (pH 6-10), phosphate buffer (pH 6.0-8.0), SSC buffer, APK Wash™, acidic buffers or solutions (pH 1-6.9), and basic buffer or solutions (pH 7.1-14).

8. The method of anyone of claims 1 to 7, wherein the biological sample is on a top surface of a slide, and wherein the step of heating includes heating a bottom side of the slide.

9. The method of claim 8, wherein the bottom side of the slide is in contact with a thermal platform and wherein the step of heating a bottom side of the slide includes heating the slide by conduction using the thermal platform.

10. The method of claim 8 or 9, wherein the step of applying heat in claim 1 includes heating the biological sample to temperatures ranging from 50°C to 130°C.

11. The method of claim 8 or 9, wherein the step of applying heat in claims 4 and 5 includes heating the biological sample to temperatures ranging from ambient to 100°C.

12. The method of anyone of claims 1 to 11, wherein the surfactant is an ionic or non-ionic surfactant.

13. The method of claim 4 or 5, wherein the second liquid contains an ionic or non-ionic surfactant.

14. The method of claim 12 or 13, wherein the surfactant is selected from the group consisting of Triton X-100, Tween, Brij, sodium dodecylsulfate and saponin.

## Patentansprüche

1. Automatisiertes Verfahren des Entfernens von Einbettmedien von einer biologischen Probe, wobei das Verfahren die Schritte umfaßt:
Erwärmen der Einbettmedium enthaltenden biologischen Probe auf eine Temperatur oberhalb des Schmelzpunkts der Einbettmedien, um ein verflüssigtes Einbettmedium zu bilden und
Aufbringen einer Flüssigkeit, enthaltend DI-Wasser und ein grenzflächenaktives Mittel, auf die biologische Probe, um die verflüssigten Einbettmedien von der biologischen Probe zu trennen, wobei das Einbettmedium Paraffin ist.

2. Verfahren nach Anspruch 1, wobei der Schritt des Aufbringens das Abspülen der geschmolzenen Einbettmedien von der biologischen Probe beinhaltet.

3. Verfahren nach Anspruch 1, wobei der Schritt des Schmelzens nach dem Schritt des Aufbringens einer Flüssigkeit durchgeführt wird.

4. Verfahren nach Anspruch 1, das ein automatisiertes Verfahren des gleichzeitigen Entfernens von Einbettmedien von einer biologischen Probe ist, während Zellkonditionierung innerhalb eines biologischen Färbevorgangs bereitgestellt wird, weiter umfassend die Schritte:
Aufbringen einer zweiten Flüssigkeit, umfassend Freilegungs- und Zellkonditionierungsreagenzien,
Anwenden von Wärme auf die biologische Probe,
Aufbringen eines Fluids, um die Freilegungs- und Zellkonditionierungsreagenzien zu entfernen und
Färben der biologischen Probe.

5. Verfahren nach Anspruch 1, weiter umfassend die Schritte:
Aufbringen einer zweiten Flüssigkeit, umfassend Zellkonditionierungsreagenzien, auf die biologische Probe,
Aufbringen eines Fluids, um die Zellkonditionierungsreagenzien zu entfernen und
Färben der biologischen Probe.

6. Verfahren nach einem der Ansprüche 1 bis 5, wobei die DI-Wasser enthaltende Flüssigkeit ausgewählt ist aus der Gruppe, bestehend aus deionisiertem Wasser, Citratpuffer (pH 6,0 - 8,0), Tris-HCI-Puffer (pH 6 - 10), Phosphatpuffer (pH 6,0 - 8,0), SSC-Puffer, APK Wash™, sauren Puffern oder Lösungen (pH 1 - 6,9) und basischen Puffern oder Lösungen (pH 7,1 - 14).

7. Verfahren nach Anspruch 4 oder 5, wobei die zweite Flüssigkeit ausgewählt ist aus der Gruppe, bestehend aus deionisiertem Wasser, Citratpuffer (pH 6,0 - 8,0), Tris-HCI-Puffer (pH 6 - 10), Phosphatpuffer (pH 6,0 - 8,0), SSC-Puffer, APK Wash™, sauren Puffern oder Lösungen (pH 1 - 6,9) und basischen Puffern oder Lösungen (pH 7,1 - 14).

8. Verfahren nach einem der Ansprüche 1 bis 7, wobei sich die biologische Probe auf einer oberen Oberfläche eines Objektträgers befindet und wobei der Schritt des Erwärmens das Erwärmen einer unteren Seite des Objektträgers beinhaltet.

9. Verfahren nach Anspruch 8, wobei die untere Seite des Objektträgers in Kontakt mit einer Heizplatte ist und wobei der Schritt des Erwärmens einer unteren Seite des Objektträgers das Erwärmen des Objektträgers mittels Konduktion unter Verwendung der Heizplatte beinhaltet.

10. Verfahren nach Anspruch 8 oder 9, wobei der Schritt des Anwendens von Wärme in Anspruch 1 das Erwärmen der biologischen Probe auf Temperaturen, die von 50°C bis 130°C reichen, beinhaltet.

11. Verfahren nach Anspruch 8 oder 9, wobei der Schritt des Anwendens von Wärme in den Ansprüchen 4 und 5 das Erwärmen der biologischen Probe auf Temperaturen, die von Raumtemperatur bis 100°C reichen, beinhaltet.

12. Verfahren nach einem der Ansprüche 1 bis 11, wobei das grenzflächenaktive Mittel ein ionisches oder nicht-ionisches grenzflächenaktives Mittel ist.

13. Verfahren nach Anspruch 4 oder 5, wobei die zweite Flüssigkeit ein ionisches oder nicht-ionisches grenzflächenaktives Mittel enthält.

14. Verfahren nach Anspruch 12 oder 13, wobei das grenzflächenaktive Mittel ausgewählt ist aus der Gruppe, bestehend aus Trition X-100, Tween, Brij, Natriumdodecylsulfat und Saponin.

## Revendications

1. Procédé automatisé d'extraction de milieu(x) de fixation d'un échantillon biologique, le procédé comprenant les étapes de :
chauffage de l'échantillon biologique contenant le milieu de fixation jusqu'à une température supérieure au point de fusion du milieu de fixation pour former un milieu de fixation liquide, et
application d'un liquide contenant de l'eau DI et un tensioactif à l'échantillon biologique pour séparer le milieu de fixation liquéfié de l'échantillon biologique, où le milieu de fixation est la paraffine.

2. Procédé selon la revendication 1, où l'étape d'application comprend le rinçage du milieu de fixation fondu depuis l'échantillon biologique.

3. Procédé selon la revendication 1, où l'étape de fusion est effectuée après l'étape d'application d'un liquide.

4. Procédé selon la revendication 1, qui est un procédé automatisé d'élimination simultanée de milieu(x) de fixation d'un échantillon biologique tout en effectuant un conditionnement cellulaire au sein d'une procédure de coloration biologique, comprenant en outre, les étapes de :
application d'un deuxième liquide comprenant des réactifs d'exposition et de conditionnement cellulaire ;
application de chaleur sur l'échantillon biologique ;
application d'un fluide pour éliminer les réactifs d'exposition et de conditionnement cellulaire, et
coloration de l'échantillon biologique.

5. Procédé selon la revendication 1, comprenant en outre, les étapes de :
application d'un deuxième liquide comprenant des réactifs de conditionnement cellulaire sur l'échantillon biologique ;
application d'un fluide pour éliminer les réactifs de conditionnement cellulaire, et
coloration de l'échantillon biologique.

6. Procédé selon l'une quelconque des revendications 1 à 5, où le liquide contenant de l'eau DI est choisi parmi le groupe consistant en de l'eau déminéralisée, un tampon citrate (pH 6,0-8,0), un tampon Tris-HCI (pH 6-10), un tampon phosphate (pH 6,0-8,0), tampon SSC, APK Wash™, des tampons ou solutions acides (pH 1-6,9) et des tampons ou solutions basiques (pH 7,1-14).

7. Procédé selon la revendication 4 ou 5, où le deuxième liquide est choisi parmi le groupe consistant en de l'eau déminéralisée, un tampon citrate (pH 6,0-8,0), un tampon Tris-HCl (pH 6-10), un tampon phosphate (pH 6,0-8,0), tampon SSC, APK Wash™, des tampons ou solutions acides (pH 1-6,9) et des tampons ou solutions basiques (pH 7,1-14).

8. Procédé selon l'une quelconque des revendications 1 à 7, où l'échantillon biologique se trouve sur la surface d'une lame, et où l'étape de chauffage comprend le chauffage d'une face inférieure de la lame.

9. Procédé selon la revendication 8, où la face inférieure de la lame est en contact avec une plateforme thermique et où l'étape de chauffage de la face inférieure de la lame comprend le chauffage de la lame par conduction à l'aide de la plateforme thermique.

10. Procédé selon la revendication 8 ou 9, où l'étape d'application de chaleur de la revendication 1 comprend le chauffage de l'échantillon biologique à une température située dans l'intervalle allant de 50°C à 130°C.

11. Procédé selon la revendication 8 ou 9, où l'étape d'application de chaleur aux revendications 4 et 5 comprend le chauffage de l'échantillon biologique à des températures située dans l'intervalle allant de la température ambiante à 100°C.

12. Procédé selon l'une quelconque des revendications 1 à 11, où le tensioactif est un tensioactif ionique ou non ionique.

13. Procédé selon la revendication 4 ou 5, où le deuxième liquide contient un tensioactif ionique ou non ionique.

14. Procédé selon la revendication 12 ou 13, où le tensioactif est choisi parmi le groupe consistant en le Triton X-100, le Tween, le Brij, le dodécylsulfate de sodium et une saponine.
